# EUROPEAN PATENT APPLICATION

(11) **EP 3 439 347 A1**
(43) Date of publication of application: **06.02.2019**
(21) Application number: 18184839.1
(22) Date of filing: 20.07.2018
(51) Int. Cl.: H04W 12/08, H04L 29/06, H04W 12/06

(54) **ELECTRONIC DEVICE INCLUDING DISPLAY AND METHOD OF APPLYING PRIVACY FILTER**

(30) Priority: 01.08.2017 US 201715666284
(71) Applicant: BlackBerry Limited, Waterloo, Ontario N2K 0A7 (CA)
(72) Inventor: ADAMS, Neil Patrick, Waterloo, Ontario N2K 0A7 (CA); KOMINAR, Jeremy Lawson, Waterloo, Ontario N2K 0A7 (CA)
(74) Representative: Hanna Moore + Curley

(57) **Abstract**

A method of applying a privacy filter to information on the display of the electronic device includes applying the privacy filter to information for display on the display such that the information is obscured on the display, repeatedly receiving data from a sensor of the electronic device, repeatedly performing an authentication to determine if the data is associated with biometric data of an authorized user, displaying a portion of the information such that the portion of the information is unobscured in response to determining that the data is associated with the biometric data of the authorized user, and applying the privacy filter to the portion of the information such that the portion of the information is obscured in response to determining that the data from the sensor is no longer associated with the biometric data of the authorized user.

## Description

### FIELD OF TECHNOLOGY

The present disclosure relates to applying a privacy filter to information on a display of an electronic device.

### BACKGROUND

Electronic devices, have gained widespread use and may provide a variety of functions including, for example, telephonic, electronic messaging and other personal information manager (PIM) application functions. Electronic devices include several types of devices including mobile stations such as simple cellular telephones, smart telephones, wireless PDAs, and computers.

Such electronic devices are often able to display various types of information to a user. In some situations, protection of the information displayed to inhibit viewing by others near the electronic device that is displaying the information is desirable. Software display privacy filters, which operate to reduce the visibility of the information displayed on a device display, may operate to protect the displayed content from viewing by others near the device.

Improvements in protection of such information are desirable.

### SUMMARY

Accordingly there is provided a method, computer program and device as detailed in the claims that follow.

### BRIEF DESCRIPTION OF THE DRAWINGS

Embodiments of the present disclosure will now be described, by way of example only, with reference to the attached figures, in which:
FIG. 1 is a block diagram of a portable electronic device in accordance with the present disclosure;
FIG. 2 is a front view of an example of an electronic device in accordance with the present disclosure;
FIG. 3 through FIG. 5 illustrate examples of privacy filters in accordance with the disclosure;
FIG. 6 is a flowchart illustrating a method of applying a privacy filter in accordance with the present disclosure.

### DETAILED DESCRIPTION

The following describes an electronic device including a sensor and a display and a method of applying a privacy filter to information on the display of the electronic device. The method includes applying the privacy filter to information for display on the display such that the information is obscured on the display, repeatedly receiving data from a sensor of the electronic device, repeatedly performing an authentication to determine if the data is associated with biometric data of an authorized user, displaying a portion of the information such that the portion of the information is unobscured in response to determining that the data is associated with the biometric data of the authorized user, and applying the privacy filter to the portion of the information such that the portion of the information is obscured in response to determining that the data from the sensor is no longer associated with the biometric data of the authorized user.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device. Examples of electronic devices include mobile, or handheld, wireless communication devices such as cellular phones, cellular smart-phones, wireless organizers, personal digital assistants, computers, tablet computers, mobile internet devices, electronic navigation devices, and so forth.

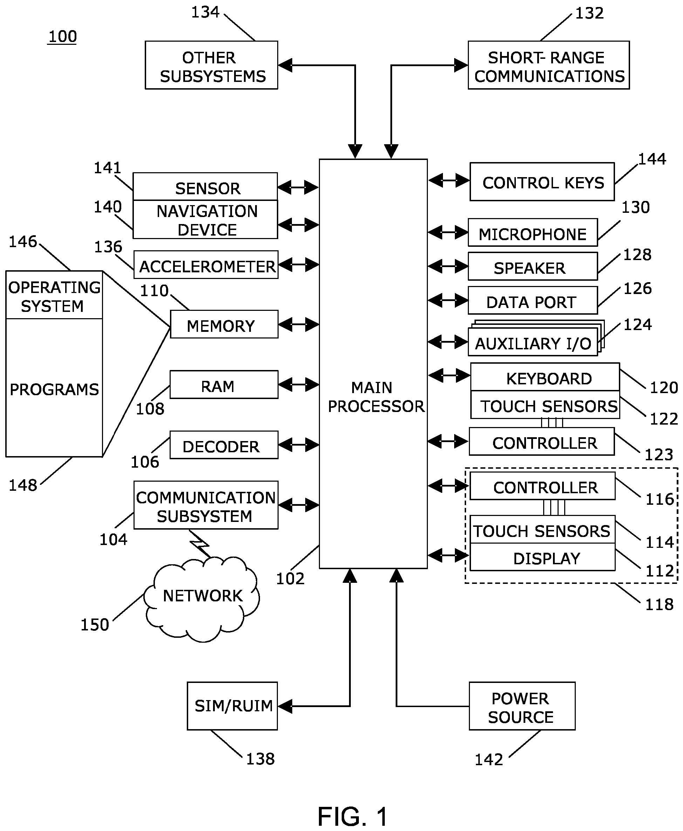

A block diagram of one example of an electronic device 100, which in the present example is a portable electronic device, is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, a keyboard 120, an auxiliary input/output (I/O) subsystem 124, a data port 126, a speaker 128, a microphone 130, short-range communications 132 and other device subsystems 134. The speaker 128, also referred to as an earpiece speaker, is utilized to output audible signals when a user's ear is very close to the speaker 128. Although not shown, the processor may also interact with a loudspeaker, for example, for hands-free use.

The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

The keyboard 120 includes a plurality of keys, which may be mechanical keys that include mechanical switches or contacts for input to the electronic device 100 when a mechanical key of the keyboard is depressed by a sufficient amount to oppose a bias of the mechanical key. In addition, the keys of the keyboard include touch sensors 122 coupled to a controller 123 to detect touch input thereon. The controller may be a keyboard controller 123 as illustrated in FIG. 1. Alternatively, the keys of the keyboard 120 may be coupled to the controller 116 utilized to detect touches using the touch sensors 114 of the touch-sensitive display 118.

The processor 102 also interacts with a plurality of control keys 144 and a navigation device 140. The control keys 144 may include, for example, a send key, a menu key, an escape key, an end key, or any other suitable control keys. The navigation device 140 may be a touch-sensitive track pad, an optical joystick, or any other suitable navigation device to interface with a user to provide input. The navigation device 140 may be utilized, for example, to navigate or scroll through information on a display, control a cursor or other indicator, edit information, and so forth.

The processor 102 also interacts with a biometric sensor 141 for obtaining data to authenticate a user. The biometric sensor 141 may be a fingerprint sensor disposed on the navigation device for detecting a touch thereon and obtaining fingerprint data upon receipt of a touch on the navigation device. Other biometric sensors may also be successfully implemented. For example, an iris scanner or other suitable detector may be utilized for the purpose of authenticating a user.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display that includes a plurality of capacitive touch sensors 114. Capacitive touch sensors 114 include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

By repeatedly scanning the electrodes of the touch-sensitive display 118 to detect touches, movement of a touch relative to the touch-sensitive display 118 may be detected. One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch sensors 122 on the keyboard may be any suitable touch sensors, such as capacitive touch-sensors and may comprise any suitable material, such as indium tin oxide (ITO). Optionally, the touch sensors 122 disposed on the keyboard 120 may be coupled to the same controller 116 as the touch sensors of touch-sensitive display 118 such that a single controller is utilized rather than two controllers 116, 123.

One or more touches on the keys of the keyboard 120 may be detected. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the keyboard 120. A touch may be detected from any suitable input member and multiple simultaneous touches may be detected.

One or more gestures may also be detected utilizing the touch sensors 122 disposed on the keyboard 120. A gesture on the keys of the keyboard 120 may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover.

The touch-sensitive display 118 includes a display area in which information may be displayed, and a non-display area extending around the periphery of the display area. Information is not displayed in the non-display area by the display. The non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

As indicated above, the biometric sensor 141 may be a fingerprint sensor disposed on the navigation device 140 for detecting a touch thereon and obtaining fingerprint data upon receipt of a touch on the navigation device. The fingerprint sensor may include a plurality of transmit and receive electrodes that are disposed in a grid pattern. The transmit electrodes are very closely spaced and receive electrodes are very closely spaced relative to the electrodes of the touch-sensitive display, for example, to provide a very fine grid pattern. The fine grid pattern provides very fine resolution suitable for identifying a fingerprint pattern and for detecting conductivity of ridges and valleys in a fingerprint.

Optionally, the navigation device 140 may be utilized to detect the presence of a finger on the biometric sensor 141 and, in response, the biometric sensor 141 may obtain fingerprint data for authentication purposes.

In an alternative example, the biometric sensor 141 may be an iris scanner. A navigation device in the form of an eye tracking device, for tracking movement of the eyes may be utilized for navigation. The eye tracking device may also be operable to scan the retina of an eye such that the biometric sensing may be carried out during navigation.

In still another alternative, the biometric sensor may be a voice recognition device. Navigation may be carried out by voice commands that may also be utilized for voice recognition to authenticate a user.

The processor 102 receives the biometric data from the sensor 141 and compares the biometric data to biometric data stored, for example, in memory 136 to authenticate a user. A match or at least partial match of the biometric data from the sensor 141 results in authentication. The biometric data may therefore be utilized, for example, to unlock the electronic device 100, to access applications, documents, or information on the electronic device 100, or for any other suitable purpose. The biometric data is also utilized for controlling a privacy filter.

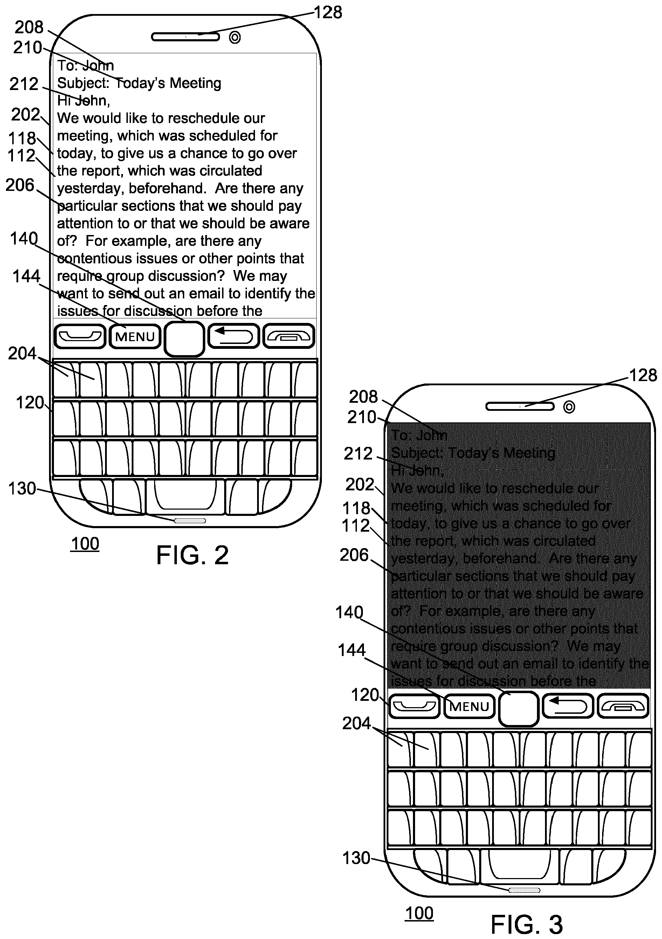

An example of an electronic device without a privacy filter applied is shown in FIG. 2. Examples of an electronic device 100 including privacy filters are shown in FIG. 3 through FIG. 5. In these examples, the electronic device 100 includes a housing 202 in which the touch-sensitive display 118 is disposed. The housing 202 is utilized to enclose components such as the components shown in FIG. 1. The keyboard 120 is disposed below the touch-sensitive display 118 in the orientation illustrated in FIG. 2 through FIG. 5.

The mechanical keyboard 120 includes a plurality of keys 204. Each one of the keys 204 of the keyboard 120 is associated with a character such that a character is entered utilizing a key 204. The keyboard 120 in the present example, includes four rows of keys 204 other numbers of rows of keys may be implemented, however.

The control keys 144 are generally aligned in a row disposed between the touch-sensitive display 118 and the mechanical keyboard 120.

In this example, the control keys include a send key, a menu key, an escape key, and an end key. Other suitable control keys can be utilized, however.

The navigation device 140 is disposed in the center of the row of control keys 144. For the purpose of the present example, the navigation device 140 is an optical joystick for user input. The biometric sensor 141 is disposed on the navigation device 140 to facilitate authentication of a user during use of the navigation device 140. Thus, as a user utilizes the navigation device 140, for example, for scrolling or to control a cursor, the biometric sensor 141 provides data to the processor 102 (shown in FIG. 1) for authentication of the user.

Because the biometric sensor 141 is located on the navigation device 140, the navigation device may be utilized to detect a touch by detecting the presence of a finger or thumb of a user and, in response to detecting the presence of a finger or thumb, the biometric sensor 141 begins sensing to obtain fingerprint data. Thus, the navigation device 140 facilitates selective use of the biometric sensor 141 such that the biometric sensor is not continually attempting to obtain fingerprint data even in the absence of a finger or thumb on the navigation device 140, thus reducing power use.

The speaker 128 and the microphone 130 are disposed in openings in the housing 202. As indicated above, the speaker 128 outputs audible information and the microphone 130 is utilized to convert audible information into electrical signals for processing.

For the purpose of the example of FIG. 2, information received 206 is displayed on the touch-sensitive display 118. The information displayed may include any suitable information such as icons, text, pictures, video, documents, a webpage, or any other suitable information. The information may be associated with, for example, a home page, a menu or submenu, an application or applications, and so forth.

The information received 206 in the example of FIG. 2 through FIG. 5 is a message, such as an email message displayed on the touch-sensitive display 118. The information received 206 that is displayed is text that includes words or strings in sentences arranged in paragraphs. Part of the information may not be displayed. For example, the information may too long, or may be displayed at a font or character size that is too large to be displayed at one time on the touch-sensitive display 118. Additional information may be displayable, for example, by scrolling upwardly or downwardly to change the part of the information that is displayed.

The email message may be a message received or a message composed utilizing the portable electronic device 100. The information includes fields such as a recipient or "To:" field 208, a "Subject" field 210 and a message content field 212.

FIG. 2 illustrates a state of the electronic device 100 in which no privacy filter is provided. The information is information received 206, for example, from another electronic device via a network connection, received from the memory 110, or received from entry of the text utilizing the keyboard 120. The information is displayed on the display 112 of the touch-sensitive display 118 without obscuring any portion of the text received. Thus, the content of the received text is exposed for viewing. For the purpose of the present example, the information is text of an email. The information may be any other suitable information associated with any other suitable application from any suitable source.

FIG. 3 illustrates a state in which the information received 206, which is text in this example, is completely obscured by presenting an image for which the background 302 is darkened, thus reducing the contrast between the text that is displayed and the background. By darkening the image, displayed text is obscured to reduce readability and thereby reduce the chance of reading by others that are near the electronic device 100. The apparent transparency of the background is thus reduced. As a result, information displayed on the display 112 may still be discernible by the user when viewing the information from a position close to the device and within a suitable viewing angle. The information may not be discernible, however, to a person viewing from a position outside of a specified range and outside of a suitable viewing angle. Alternatively, the text may be obscured by reducing the darkness of the information, or by generally blurring the information to reduce readability or discernibility of the information.

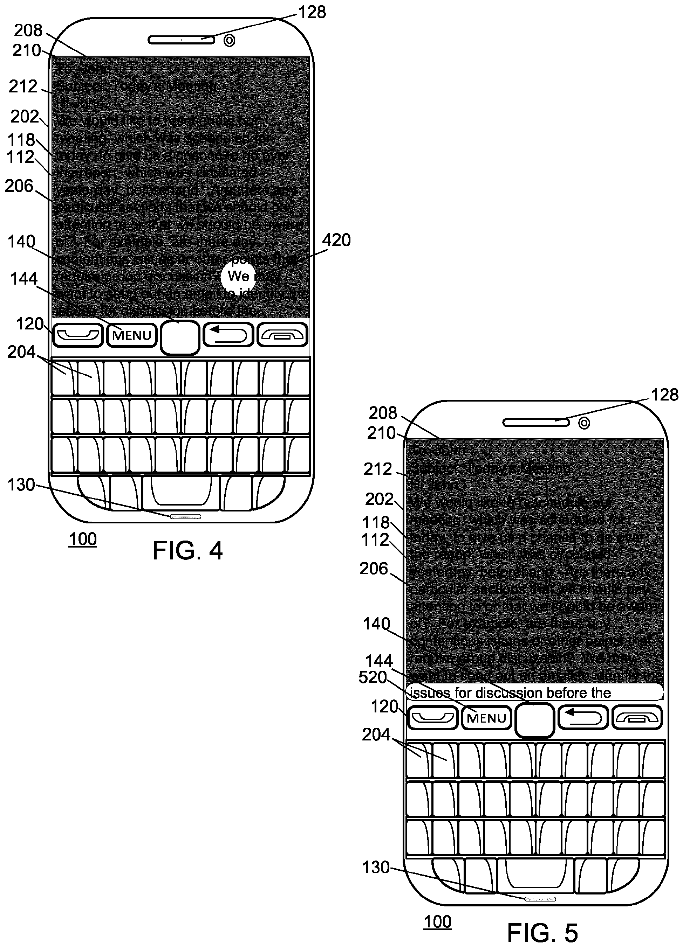

FIG. 4 illustrates a state in which information received 206, which is text in this example, is partially exposed such that a portion 420 of the information received 206 is unobscured and the remaining text is obscured by darkening the background 402 around the remaining text to reduce the contrast between the remaining text and the background 402. In this example, the remaining text that is obscured may be so obscured to make the text unreadable. For the purpose of this example, the portion 420 of the text that is unobscured is circular in shape such that the text in the circular region is displayed clearly. Other shapes of unobscured regions may be implemented, however. For example, the unobscured region may be elliptical, square, or irregular in shape.

FIG. 5 illustrates another state in which information received 206, which is text in this example, is partially exposed such that a portion 520 of the information received 206 is unobscured and the remaining text is obscured by darkening the background 502 around the remaining text to reduce the contrast between the remaining text and the background 502. In this example, the remaining text that is obscured may be so obscured to make the text unreadable. For the purpose of this example, the portion 520 of the text that is unobscured is an entire line of text displayed such that the final line of text is displayed clearly. The display of the final line of text is useful for facilitating reading of the information received 206 or, for example, composition of the information in the form of text that is received at the processor 102.

In each of the examples shown in FIG. 3 through FIG. 5 ,the information that is not exposed is obscured by darkening the background to reduce the contrast between the background and the text. Alternatively, the information may be obscured by reducing the darkness of the information. Alternatively, the information may be obscured by blurring the information to reduce readability or discernibility of the information. Thus, the obscured information is blurred such that the obscured information is unreadable when the privacy filter is applied.

For the purpose of the present explanation, the information to which the privacy filter is applied is still discernible in the examples of FIG. 3 through FIG. 5. The information that is obscured by the privacy filter, however, may not be discernible, even when reading the information at close proximity.

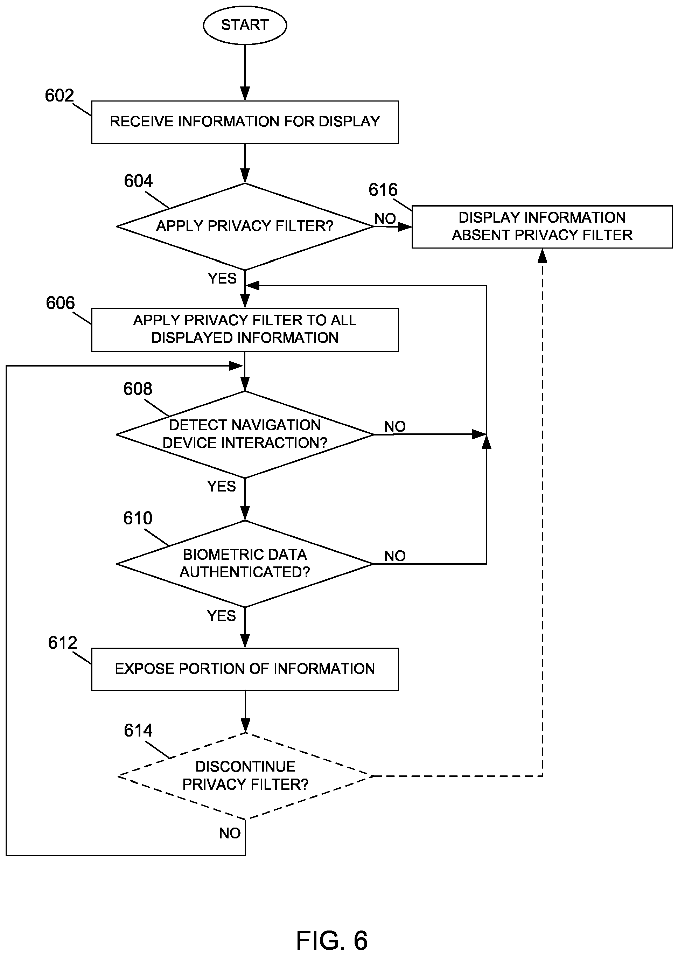

A flowchart illustrating a method of applying a privacy filter to information on a display of an electronic device, such as the portable electronic device 100, is shown in FIG. 6. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor, such as the processor 102, of the portable electronic device to perform the method may be stored in a computer-readable storage medium, such as a non-transitory computer-readable medium.

Information is received for displaying on the display 112 at 602. The information may include text, characters, symbols, images, icons, and other items that may be displayed or rendered on a portable electronic device 100 in association with an application executed by the processor 102, such as, for example, an electronic mail, calendar, address book, word processor, Web browser, or any other suitable application. The information may be information received from another electronic device in communication with the electronic device 100, may be information stored on the electronic device 100 and thus received at the processor 102 from memory such as the memory 110, information received at the processor 102 from an input device such as the keyboard 120, for example, during composition of a message, note, or any other information.

A determination is made whether to apply a privacy filter at 604. The privacy filter may be applied based on a setting or settings in the associated application, based on a setting or settings on the electronic device 100, based on the information received, a source, sender, or author of the information received, a subject, a keyword or keywords in the information received, a flag or other indicator associated with the information received, or any other suitable basis. In one example, a classification may be associated with the information received at 602. The classification may include, for example, unclassified, private, or top secret. Other classifications may also be utilized. The classifications may be utilized to determine whether or not a privacy filter is applied and, optionally, may be utilized to determine which privacy filter is applied, such as which of the examples of privacy filters disclosed with reference to FIG. 3 to FIG. 5 is utilized.

Alternatively or in addition, the determination whether to apply a privacy filter may be based on indications such as detection of another person within a specified proximity of the electronic device 100, within a viewing angle of the electronic device 100, or other criteria.

Optionally, the determination to apply a privacy filter may be made in response to receipt of a command, which is input by a user, for example, to apply the privacy filter. In a specific example, a particular swipe gesture may be associated with a command to apply the privacy filter. For example, a multi touch vertical swipe downwardly on the display 112 or on the keyboard 120 may be associated with a command to apply the privacy filter and thus, results in continuation of the method at 606.

The privacy filter is applied at 606 to all the information received at 602 for display on the display 118. Thus, the privacy filter, which may be a display background darkness, contrast level of the information, a blur effect or blurring of the information, a darkness of the information displayed, or a combination thereof, is applied, as illustrated in the example of FIG. 3, such that the information is difficult to discern, particularly from an angle other than in front of the display, or is not discernible.

A determination is made if the navigation device is utilized, for example, a touch is detected on the navigation device 140 at 608. In the example shown in FIG. 1 and FIG. 2, the biometric sensor 141 is disposed on the navigation device 140 and thus, the navigation device 140 is utilized to detect the touch and, in response to detecting the touch, the process continues at 610 and the biometric sensor 141 begins collecting fingerprint data and a fingerprint authentication is carried out.

The biometric sensor 141 is utilized to capture data relating to unique biological traits. For example, the biometric sensor 141 is utilized to detect the fingerprint pattern and conductivity of ridges and valleys in the fingerprint, for comparison to fingerprint data that is stored on the electronic device 100 and that is associated with an authorized user or users. The processor 102 receives the biometric data from the biometric sensor 141 and compares the biometric data to biometric data stored, for example, in memory 136. A match or at least partial match of the biometric data from the sensor 141 results in authentication at 610 and the process continues at 612.

A portion of the information is exposed or unobscured at 612. A circular region of the information may be unobscured, as illustrated in the example of FIG. 4. In an alternative, the final line of the information may be unobscured, as illustrated in the example of FIG. 5. Thus, the biometric data is utilized for controlling a privacy filter. Optionally, the location of the circular region of the information that is unobscured or the line of the information that is unobscured may be changed utilizing the navigation device 140. Thus, a touch that is detected on the navigation device 140, may be utilized for carrying out the authentication and for adjusting or changing the portion of the information that is unobscured.

In the absence of, for example, a touch on the navigation device 140 at 608, the process returns to 606 and the application of the privacy filter is continued to continue obscuring all the received information on the touch-sensitive display 118. Similarly, in response to the processor 102 determining that the biometric data from the sensor 141 does not match or partially match the biometric data stored, for example, in memory 136, the process returns to 606 and the application of the privacy filter is continued to continue obscuring all the received information on the touch-sensitive display 118.

Optionally, a user may select an option to discontinue the privacy filter at 614. In response to receipt of selection of an option to discontinue the privacy filter, the information is displayed without the privacy filter applied to any part of the information at 616. Thus, the information that was previously displayed with a privacy filter applied, may only be displayed without application of the privacy filter after authentication utilizing the biometric data. Absent receipt of selection of an option to discontinue the privacy filter, the process continues at 608.

After the portion of the information is exposed or unobscured at 612, the process continues at 608. Touch detection is again carried out at 608 and, in response to detecting a touch at 608, the authentication is again carried out at 610. Thus, authentication is repeatedly performed as the biometric sensor 141 repeatedly provides data to the processor 102 and the processor 102 repeatedly compares the data to determine if the data is associated with biometric data of an authorized user.

When the touch is no longer detected at 608 or in response to determining that the data from the sensor is no longer associated with the biometric data of the authorized user at 610, the privacy filter is again applied to obscure all the information at 606.

In the example shown in FIG. 6, the privacy filter is applied at 606 and the information is obscured. Authentication utilizing the biometric data is carried out at 610. In response to the processor 102 determining that the biometric data from the sensor 141 does not match or partially match the biometric data stored, for example, in memory 136, the process returns to 606 and the application of the privacy filter is continued to continue obscuring all the received information on the touch-sensitive display 118. Alternatively, in response to the processor 102 determining that the biometric data from the sensor 141 does not match or partially match the biometric data stored in memory 136, the privacy filter, the privacy filter may be changed to further obscure the information. For example, the information may be blacked out or further blurred to the extent that the information cannot be discerned from any angle.

Continued reference is made to FIG. 3 through FIG. 6 for the following examples. According to one example, the information is received at 602 by email and the information includes a subject line "Personal and Confidential". A determination is made to apply a privacy filter based on these keywords in the subject line at 604 and the privacy filter is applied to obscure all the information at 606. An unauthorized user places a finger on the navigation device 140 and the touch is detected at 608. The fingerprint data is received at the processor 102, from the biometric sensor 141, and the processor 102 does not identify a match between the fingerprint data received from the biometric sensor 141 and the data stored on the electronic device 100 and associated with an authorized user. No part of the information is unobscured.

According to another example, the information is received at 602 by email and the information is received from an electronic device of a sender. A determination is made to apply a privacy filter based on the sender of the information at 604 and the privacy filter is applied to obscure all the information at 606. An authorized user places a finger on the navigation device 140 and the touch is detected at 608. The fingerprint data is sent from the biometric sensor 141 to the processor 102 and the processor identifies a match between the fingerprint data received from the biometric sensor 141 and the data store on the electronic device and associated with the authorized user. A part of the information is unobscured, as illustrated in FIG. 4 or FIG. 5. The process returns to 608. The portion of the information that is unobscured remains unobscured while the touch remains on the navigation device 140.

The user lifts his or her finger from the navigation device and the touch is no longer detected at 608. The privacy filter is again applied to obscure all of the information such that the information that was previously unobscured is obscured again.

If an unauthorized user attempts to view the information, no part of the information received is unobscured. Thus, absent identification of a match of the data from the biometric sensor 141 to the biometric data stored on the electronic device, the data from the biometric sensor 141 is no longer associated with the biometric data of the authorized user and all the received information is obscured.

In the examples described above with reference to FIG. 3 through FIG. 6, the navigation device 140 is an optical joystick and the biometric sensor is a fingerprint detector. Alternatively, a portion of the keyboard 120, including the touch sensors 122 may be utilized to detect a touch and a fingerprint. Thus, the keyboard 120, including the touch sensors 122, may be utilized as the biometric sensor. Alternatively, further sensors may be embedded in a key of the keyboard 120 for use as the biometric sensor. As indicated above, the navigation device may alternatively be an eye tracking device, for tracking movement of the eyes for navigation, and the eye tracking device may be operable to scan the retina of an eye for biometric sensing during navigation. In still another alternative, the biometric sensor may be a voice recognition device and navigation may be carried out by voice commands that may also be utilized for voice recognition to authenticate a user.

For example, the information is received at 602 by email and the information includes a subject line "Personal and Confidential". A determination is made to apply a privacy filter based on these keywords in the subject line at 604 and the privacy filter is applied to obscure all the information at 606. An unauthorized user attempts to view the information. The eye tracking device detects the presence of the eye at 608. Iris scan data is then received at the processor 102 and the processor 102 does not identify a match between the iris scan data received from the biometric sensor and the data stored on the electronic device 100 and associated with an authorized user. No part of the information is unobscured.

Advantageously, a portion of the information is unobscured when the biometric data is matched to an authorized user. In response to, for example, the touch ending, or an absence of a touch, or in response to the a determination that the biometric data from the biometric sensor 141 no longer matches the data stored on the electronic device 100 and is therefore no longer associated with the biometric data of the authorized user, all of the information is again obscured to inhibit display of the information to an unauthorized user. Optionally, the portion of information may be left visible, or unobscured for a period of time after the touch ends. For example, the portion of the information may be left unobscured for 5 seconds after the end of the touch. The privacy filter may also be applied gradually after the touch ends. For example, the apparent transparency may change gradually such that the apparent transparency of the portion of information that was unobscured is slowly changed until the portion of the information is obscured again.

The scope of the claims should not be limited by the preferred embodiments set forth in the examples, but should be given the broadest interpretation consistent with the description as a whole.

## Claims

1. A method of applying a privacy filter on a display of an electronic device, the method comprising:
applying the privacy filter to information for display on the display such that the information is obscured on the display;
repeatedly receiving data from a sensor of the electronic device;
repeatedly performing an authentication to determine if the data is associated with biometric data of an authorized user;
displaying a portion of the information such that the portion of the information is unobscured in response to determining that the data is associated with the biometric data of the authorized user;
applying the privacy filter to the portion of the information such that the portion of the information is obscured in response to determining that the data from the sensor is no longer associated with the biometric data of the authorized user.

2. The method according to claim 1, wherein the sensor comprises a fingerprint sensor.

3. The method according to claim 2, wherein the sensor is disposed on a navigation device of the electronic device.

4. The method according to any preceding claim, wherein performing the authentication comprises comparing data received from the sensor to biometric data stored on the electronic device.

5. The method according to claim 4, comprising determining that the data is associated with biometric data of an authorized user in response to determining that the data matches at least part of the biometric data stored on the electronic device.

6. The method according to claim 4, comprising determining that the data from the sensor is no longer associated with the biometric data of the authorized user absent identification of a match of the data to the biometric data stored on the electronic device.

7. The method according to claim 6, comprising determining that the data from the sensor is no longer associated with the biometric data of the authorized user absent detection of a touch on the fingerprint sensor.

8. The method according to claim 7, wherein the sensor comprises a fingerprint sensor and a touch detector associated with the fingerprint sensor.

9. The method according to any preceding claim, comprising receiving the information for display on the display of the electronic device.

10. The method according to claim 9, wherein applying the privacy filter comprises applying the privacy filter based on one or more of a setting in an associated application, a setting on the electronic device, the information received, a source of the information received, a subject of the information received, a keyword in the information received, or an indicator associated with the information received.

11. The method according to claim 9, wherein receiving the information comprises receiving, from a user input device, the information for display.

12. The method according to claim 9, wherein receiving the information comprises receiving transmitted information via a network connection.

13. A computer program which when executed by at least one processor of an electronic device is configured to perform the method according to any one of claims 1 to 12.

14. An electronic device comprising:
a display for displaying information;
a biometric sensor;
a processor operably coupled to the sensor and to the display to control the display to carry out the method of any one of claims 1 to 12.

15. The device according to claim 14, wherein the biometric sensor comprises a fingerprint sensor and a touch detector associated with the fingerprint sensor.
